# EUROPEAN PATENT APPLICATION

(11) **EP 4 607 384 A1**
(43) Date of publication of application: **27.08.2025**
(21) Application number: 23879082.8
(22) Date of filing: 17.10.2023
(51) Int. Cl.: G06F 21/56

(54) **DATA PROCESSING AND DISPLAY METHOD AND APPARATUS, ELECTRONIC DEVICE, AND STORAGE MEDIUM**

(30) Priority: 18.10.2022 CN 202211275560
(71) Applicant: DOUYIN VISION CO., LTD., Beijing 100041 (CN)
(72) Inventor: HE, Shengfan, Beijing 100028 (CN); CHEN, Siyue, Beijing 100028 (CN); SONG, Chenxi, Beijing 100028 (CN); ZHONG, Shengjun, Beijing 100028 (CN)
(74) Representative: Marks & Clerk LLP
(86) International application number: PCT/CN2023/124851
(87) International publication number: WO 2024/083093

(57) **Abstract**

Disclosed herein a method and an apparatus for processing and displaying data, an electronic device, and a storage medium. The method includes: in response to a scanning trigger operation for a current program version, scanning the current program version (S110); determining a scanning result corresponding to the current program version (S120); determining at least one presenting area, corresponding to the at least one function category in the scanning result, in a result presenting interface (S130); and presenting the at least one function category in the scanning result in the at least one presenting area of the result presenting interface (S140).

## Description

The present disclosure claims the priority from the CN patent application No. 202211275560.9 filed with the China National Intellectual Property Administration (CNIPA) on October 18, 2022, the content of which is hereby incorporated by reference in its entirety.

### FIELD

The present disclosure relates to the technical field of human-computer interaction technology, in particular, to a data processing and display method, apparatus, an electronic device, and a storage medium.

### BACKGROUND

A process of developing an application involves multiple complicated data and code detection steps, where detecting risks in data and codes is a crucial step.

Code risk detection typically includes obtaining scanning analysis reports using a static and a dynamic scanning method, to enable developers to make adjustments for the risks based on the scanning analysis reports.

### SUMMARY

The embodiments of the present disclosure provide a data processing and presenting method and apparatus, an electronic device, and a storage medium.

In a first aspect, embodiments of the present disclosure provide a method for processing and presenting data, comprising:
in response to a scanning trigger operation for a current program version, scanning the current program version;
determining a scanning result corresponding to the current program version, wherein the scanning result comprises at least one fact category, at least one risk category and at least one function category corresponding to the current program version;
determining at least one presenting area, corresponding to the at least one function category in the scanning result, in a result presenting interface; and
presenting the at least one function category in the scanning result in the at least one presenting area of the result presenting interface.

In a second aspect, embodiments of the present disclosure provide an apparatus for processing and presenting data, comprising:
a program version scanning module configured to scan a current program version in response to a scanning trigger operation for the current program version;
a scanning result determining module configured to determine a scanning result corresponding to the current program version, wherein the scanning result comprises at least one fact category, at least one risk category and at least one function category corresponding to the current program version;
a presenting area determining module configured to determine at least one presenting area, corresponding to the at least one function category in the scanning result, in a result presenting interface; and
a function category presenting module configured to present the at least one function category in the scanning result in the at least one presenting area of the result presenting interface.

In a third aspect, embodiments of the present disclosure provide an electronic device, comprising:
one or more processors; and
a memory for storing one or more programs;
wherein the one or more programs, when executed by the one or more processors, cause the one or more processors to implement the method for processing and presenting data as described above according to any of the embodiments of the present disclosure.

In a fourth aspect, embodiments of the present disclosure provide a storage medium comprising computer executable instructions, wherein the computer executable instructions are used, when executed by a computer processor, to perform the method for processing and presenting data as described above according to any of the embodiments of the present disclosure.

### BRIEF DESCRIPTION OF THE DRAWINGS

Throughout the drawings, the same or similar reference symbols represent the same or similar components. It would be appreciated that the drawings are provided illustratively, where the components and elements are not necessarily drawn to scale.
Fig. 1 illustrates a flowchart of a data processing and presenting method provided by embodiments of the present disclosure;
Fig. 2 illustrates a schematic diagram of a result presenting interface provided by embodiments of the present disclosure;
Fig. 3 illustrates a schematic diagram of a result presenting interface provided by embodiments of the present disclosure;
Fig. 4 illustrates a schematic diagram of a result presenting interface provided by embodiments of the present disclosure;
Fig. 5 illustrates a schematic diagram of a result presenting interface provided by embodiments of the present disclosure;
Fig. 6 illustrates a schematic diagram of a result presenting interface provided by embodiments of the present disclosure;
Fig. 7 illustrates a schematic diagram of a result presenting interface provided by embodiments of the present disclosure;
Fig. 8 illustrates a schematic diagram of a structure of a data processing and display apparatus provided by embodiments of the present disclosure; and
Fig. 9 illustrates a schematic diagram of a structure of an electronic device provided by embodiments of the present disclosure.

### DETAILED DESCRIPTION OF EMBODIMENTS

Reference now will be made to the drawings to describe the embodiments of the present disclosure. Although some embodiments of the present disclosure are depicted in the drawings, the present disclosure could be implemented in various forms, which should not be construed as being limited to those embodiments illustrated herein. Rather, those embodiments are provided to enable a more thorough and complete understanding on the present disclosure. It would be appreciated that the drawings and embodiments of the present disclosure are provided exemplarily, without suggesting any limitation to the protection scope of the present disclosure.

It is to be understood that respective steps in the implementations of the method according to the present disclosure may be performed in different orders and/or performed in parallel. In addition, the method implementations may include additional steps and/or steps omitted. The scope of the present disclosure is not limited in the aspect.

As used herein, the term "includes" and its variants are to be read as open-ended terms that mean "includes, but is not limited to." The term "based on" is to be read as "based at least in part on." The term "an embodiment" is to be read as "at least one embodiment;" the term "another embodiment" is to be read as "at least one further embodiment;" the term "some embodiments" is to be read as "at least some embodiments." Related definitions of other terms will be provided in the description below.

It should be noted that, the terms "first," "second" and the like mentioned in the present disclosure are only used to distinguish different apparatuses, modules or units, rather than limit an order of functions performed by the apparatus, module or unit or limit interdependence.

It should be noted that, the terms "one" and "a plurality of" mentioned in the present disclosure are illustrative, not restrictive, and should be understood as "one or more" by those skilled in the art, unless explicitly specified otherwise in the context.

Names of messages or information interacted between a plurality of apparatuses in the embodiments of the present disclosure are illustrative rather than limit the scope of the messages or information.

Prior to applying the technical solution according to various embodiments of the present disclosure, the user should be informed of the type, scope of use, and use scenario of the personal information involved in an appropriate manner, and user authorization should be obtained.

For example, in response to receiving an active request from a user, prompt information is sent to the user to explicitly inform the user that the requested operation would acquire and use the user's personal information. Therefore, according to the prompt information, the user may decide on his/her own whether to provide the personal information to software or hardware, such as electronic devices, applications, servers or storage media that perform operations of the technical solution of the present disclosure.

As an optional implementation, without limitation, in response to receiving an active request from a user, the method of sending prompt information to the user may, for example, include a pop-up window, where the prompt information may be presented in the form of text in the pop-up window. In addition, the pop-up window may also carry a select control for the user to choose to "agree" or "disagree" to provide the personal information to the electronic device.

The above process of notifying and obtaining the user authorization is only illustrative, and other methods compliant with the provisions of the relevant laws and regulations can also be applied to the implementations of the present disclosure.

The data (including data *per se,* and acquisition or application of the data) involved in the present technical solution should comply with the provisions of the corresponding laws and regulations as well as relevant stipulations.

An example introduction about the application scenario precedes the details of the embodiments of the present disclosure. The embodiments of the present disclosure can be applied to any multi-dimensional information presenting scenario. By way of example, prior to releasing a current version of any application, various data and codes associated with the current program version can be scanned, to thus obtain and then display a scanning result corresponding to the program version. However, according to the related technologies, most of the scan analysis reports are scanning results listed directly in a single dimension, for example, according to a risk or function category. Considering the large amount of information contained in the scan analysis results in a normal circumstance, it is hard for users to browse and understand the scanning results listed in a single dimension, thus reducing the adjustment efficiency for risks and impacting user experience. According to the embodiments of the present disclosure, the interface space can be fully utilized to display, on the result presenting interface, various categories included in the scanning result, thereby achieving the effect of displaying multi-dimensional information on the same interface.

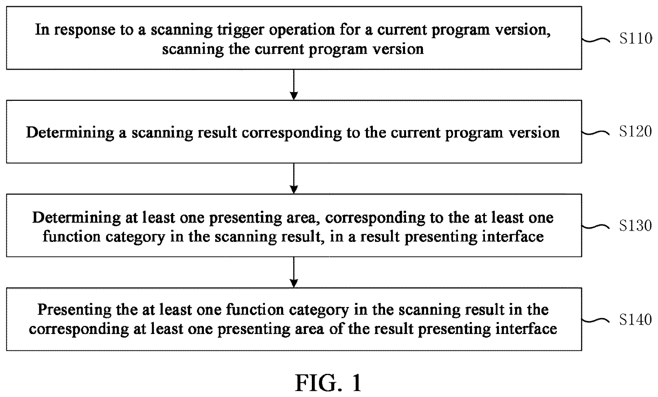

Fig. 1 is a flowchart of a data processing and presenting method provided by embodiments of the present disclosure. According to the embodiments of the present disclosure, in the case of obtaining a scanning result across a plurality of categories, the categories can be displayed in respective areas on the same result presenting interface. The method can be performed by a data processing and display apparatus, which can be implemented in the form of software and/or hardware, or by an electronic device that may be a mobile terminal, a Personal Computer (PC) or server, or the like.

As shown in Fig. 1, the method includes:
S110: in response to a scanning trigger operation for a current program version, scanning the current program version.

The current program version may be a version for which data or codes are scanned for the time being, so as to analyze security thereof based on the scanning result. It is worth noting that the current program version may be a latest version of a corresponding application, or may be any historical version of a corresponding application, which is not limited specifically herein. In practice, before any program version is released, data or code risk scanning may be performed for the program version based on a preset risk item, to allow program developers to adjust the risk issues found by scanning and thus obtain a more satisfactory program version.

In the embodiments, a control, or a snippet of program codes, for triggering scanning may be preset. Upon detecting that a user triggers the control, or receiving the program codes, a response can be made to the scanning trigger operation, including: scanning the current program version, and obtaining a scanning result corresponding to the current program version.

The response to the scanning trigger operation may be made before, or after, releasing the current program version, specifically: before releasing the current program version, static scanning can be performed thereon, and after releasing the current program version, dynamic monitor scanning can be performed thereon.

S120: determining a scanning result corresponding to the current program version.

In the embodiments, before releasing the current program version, multiple static scanning operations can be performed thereon, and the result of each scanning operation can be aggregated; after the releasing the current program version, a dynamic monitor scanning operation can be performed, and risks contained therein can be recorded; then, the aggregated result of the multiple static scanning operations and the records of the dynamic monitor scanning operation are used as the scanning result. The scanning result includes therein at least one fact category, at least one risk category, and at least one function category corresponding to the current program version.

In these embodiments, the fact category may be a scan item involved in the scanning process of the current program version. The fact category may be a technology category in the research and development progress, which may include, for example, a sensitive Application Programming Interface (API) call, a sensitive permission call, a cross-border domain name, a Software Development Kit (SDK) access, and a credential, or the like; the fact category may be a further scan item associated with the current program version, which is not limited specifically herein. Various fact categories may be preset in the research and development of an application; and in the scanning process of the current program version of the application, respective functions of the current program version can be scanned based on the respective preset fact categories, and the risky fact categories are the scanning result of this scanning operation.

In these embodiments, the risk category may be a risk issue category corresponding to the current program version. For example, the risk category may include a risk-data type, a risk behavior, access control, flash data storage, and the like. The function category may include various functions included in the application corresponding to the current program version. It is worth noting that the function category corresponds to the program version of the application, i.e., a number of function categories and contents thereof may be varied with the program version.

In an implementation, upon detecting a scanning trigger operation for the current program version, a response is made to the scanning trigger operation, including: scanning respective functions in the current program version according to the preset fact categories, and filtering out risky data or codes, to thus obtain a scanning result corresponding to the current program version.

S130: determining at least one presenting area, corresponding to the at least one function category in the scanning result, in a result presenting interface.

In these embodiments, the result presenting interface may be a pre-developed interface for presenting the scanning result. The presenting area may be a scanning result presenting area divided from the result presenting interface. The present area may match the corresponding category in in the scanning result.

In practice, the result presenting interface for presenting the scanning result can be pre-designed, and in order to clearly and intuitively present the scanning result on the interface, the result presenting interface may be divided into a plurality of presenting areas. After being obtained, the scanning result corresponding to the current program version is input into the result presenting interface, i.e., respective categories in the scanning result can be displayed in the respective presenting areas of the result presenting interface.

When the scanning result is presented on the result presenting interface, respective categories contained in the scanning result can be presented in different areas, i.e., a different category corresponds to a different presenting area.

S140: presenting the at least one function category in the scanning result in the at least one presenting area of the result presenting interface.

In these embodiments, after determining the scanning result corresponding to the current program version, and at least one presenting area corresponding to the at least one function category on the result presenting interface, respective function categories can be presented in the respective presenting areas on the result presenting interface.

In an embodiment, presenting the at least one function category in the scanning result in the at least one presenting area of the result presenting interface includes: presenting the at least one fact category in a first area of the result presenting area, the at least one risk category in a second area, and the at least one function category in a third area.

The first area, the second area and the third area correspond to different areas on the result presenting interface.

In these embodiments, the first area may be any area on the result presenting interface, for example, an interface bottom area on the result presenting interface. The second area may be any area on the result presenting interface, for example, an interface right area on the result presenting interface. The third area may be any area on the result presenting interface, for example, an interface left area on the result presenting interface.

In practice, after obtaining the scanning result corresponding to the current program version, the scanning result can be presented on the result presenting interface, where different categories contained in the scanning result can be presented in different areas. Specifically, respective fact categories are presented in the first area of the result presenting interface, respective risk categories are presented in the second area of the result presenting interface, and respective function categories are presented in the third area of the result presenting interface. In the above presenting manner, the scanning result is presented on the result presenting interface. Such arrangement has the advantages of: clearly and intuitively presenting the scanning result on the interface while simultaneously presenting respective categories contained in the scanning result on the interface, to enable developers to clearly capture the risk issues associated with the current program version and thus improve the user experience.

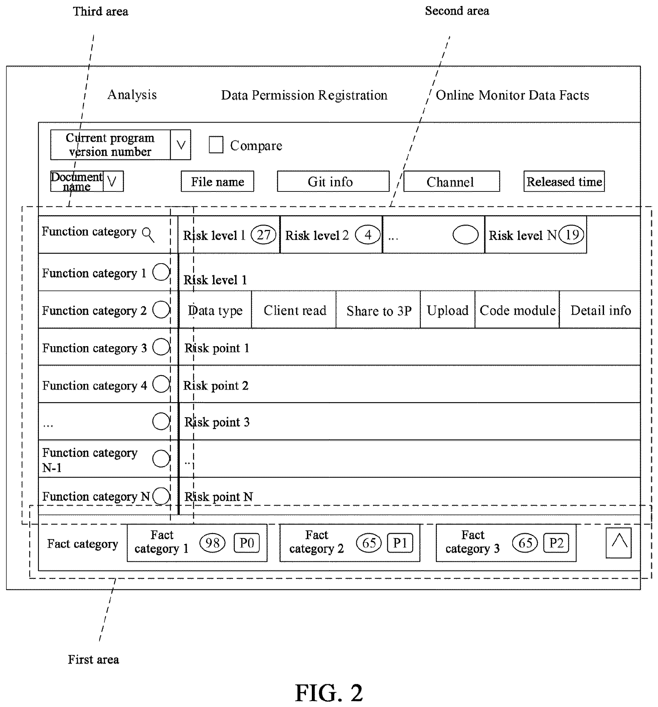

By way of example, as shown in Fig. 2 which illustrates a schematic diagram of a result presenting interface, the interface bottom area is the first area, the interface right area is the second area, and the interface left area is the third area. The first area has various fact categories displayed therein, including fact category 1, fact category 2 ... fact category N; the second area has various risk categories displayed therein, including risk category 1, risk category 2 ... risk category N, and upon detecting a trigger operation for the risk category 1, respective associated risk points can be displayed in the bottom area of the risk category 1, including risk point 1, risk point 2 ... risk point N; the third area may have various function categories displayed therein, including function category 1, function category 2 ... function category N.

It is worth noting that the result presenting interface may include other presenting areas for presenting other information associated with the current program version. By way of example, continuing with Fig. 2, a version number of the current program version and basic information associated with the current program version can be displayed in the bottom area of the result presenting interface.

In these embodiments, presenting respective categories of the scanning result in the respective presenting areas on the result presenting interface may include presenting attribute information corresponding to the respective categories. Hereinafter, description will be made on presenting the presenting categories in the scanning result on the result presenting interface.

For example, presenting the at least one function category in the scanning result in the corresponding at least one presenting area of the result presenting interface includes: determining, based on the at least one fact category and the corresponding risk level, a display content corresponding to at least one display control, and displaying the display content in a corresponding control.

Wherein, the at least one display control is arranged in the first area according to a preset rule, and the first area is expandable for display.

In these embodiments, analysis can be performed on the content contained in each fact category, and a risk level corresponding to each fact category can be determined based on the analysis result. The risk level can be used for characterizing a respective risk degree of the corresponding fact category. The risk level may be represented by a number (e.g. 0, 1, 2, 3 or the like), by an alphabet (e.g. A, B, C, D, or the like), or by other characters, which is not limited specifically herein. It is worth noting that different risk levels may be differentiated with different colors. For example, the red indicates the highest risk level, the orange indicates a higher risk level, the yellow indicates a general risk level, and the like.

In these embodiments, subsequent to determining the respective fact categories and corresponding risk levels, controls for implementing the trigger function can be created based on the respective fact categories and the corresponding risk levels, and then used as display controls. Correspondingly, the display content in the display control may include a name of the fact category, a number of risk records of the current program version in the fact category, and a risk level corresponding to the fact category.

The preset rule may be set in advance to limit the arrangement of the respective display controls. The preset rule may be set arbitrarily according to user needs. For example, the display controls can be arranged horizontally according to an order of risk levels from high to low.

Arranging the respective display controls according to the preset rule in the first area may include: arranging the respective display controls horizontally in the first area, and causing them to be slidable in the horizontal direction according to the user needs. Meanwhile, a control for expanded display may be preset in the first area. When all the display controls in the first area are to be viewed, a trigger operation can be input through the expanded display control. Upon detecting that a user performs the trigger operation for the expanded display control, the first area can be expanded for display, such that all the display controls corresponding to the current program version can be displayed in the first area.

In practice, when the respective fact categories are presented in the first area on the result presenting interface, the presenting can be implemented in the form of display controls. In other words, a factor category corresponds to a display control, and a display content of each display control can be determined based on a number of risk records of the current program version in each fact category and a risk level corresponding to each fact category and can be displayed in the display control. Meanwhile, the respective display controls can be arranged in the first area according to the preset arrangement rule, and a plurality of display controls in top positions can be directly displayed in the first area. Upon detecting a trigger operation for the expanded display control, the first area can be expanded for display, so that all the display controls can be displayed in the first area. Such arrangement has the advantages of: displaying important contents in a quite limited page space, to draw the developers' attention first to the fact categories with high risk levels, and attain the expandability of the first area through the interaction between users and the interface.

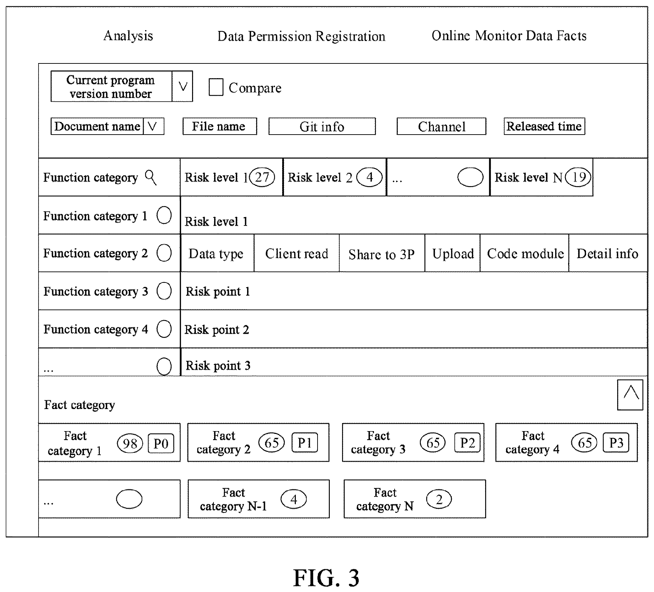

By way of example, as shown in Fig. 3, each block included in the bottom area is a display control, where each block contains a name of a corresponding fact category, a number of risk records and a risk level. For example, the number of risk records for the fact category 1 is 98, the risk level is 0, and the risk-level display area thus can be indicated with red; the number of risk records for the fact category 2 is 65, the risk level is 1, and the risk-level display area thus can be indicated with orange. Upon detecting a trigger operation for all the display controls in the first area, all the fact categories can be displayed in the first area, including the fact category 1, fact category 2, fact category 3 ... fact category N. For the fact categories with risk levels in the bottom positions, only the numbers of the risk records for these fact categories are displayed, without the risk levels thereof.

In an embodiment, presenting the at least one function category in the scanning result in the corresponding at least one presenting area of the result presenting interface includes: displaying, in the right area of the result presenting interface, the at least one risk category and at least one risk point associated with the risk category as a set of data.

Wherein, at least one risk point to be presented is displayed in a folded manner under each risk point.

In the embodiment, the risk point may be a respective risk issue existing in the current program version during the scanning. In practice, each risk category corresponds to one or more risk points. Displaying respective risk categories in the scanning result on the result displaying interface includes: for each risk category, determining corresponding data based on a content included in each risk point associated with the risk category, and displaying the same in the right area of the result displaying interface; and displaying, in the right area of the result presenting interface, the respective risk categories in the forms of tab controls, where at least one risk point associated with a corresponding risk category can be displayed in the right area upon detecting a trigger operation for a tab control. It is worth noting that the tab control corresponding to each risk category can be displayed in the top area of the risk-point display area. Such arrangement has the advantages of: displaying each risk category and respective risk points in a corresponding manner, so that respective risk points associated with the risk category can be displayed in the right area upon detecting a trigger operation for the risk category, which allows users to intuitively determine risk point information associated with the risk category.

Due to the interactive relationship between the fact category and the risk category, each risk point may further include risk sub-points classified based on each fact category, and the risk sub-points may be used as risk points to be presented. In practice, in order to display as many risk points as possible in a limited display area, the risk points to be displayed corresponding to each risk point are displayed in a folded manner, and upon detecting a trigger operation for any area in the risk point, the respective risk points to be displayed corresponding to the risk point are displayed in the corresponding area.

On the basis of the embodiments described above, the method further includes: in response to detecting that the risk point is triggered, displaying at least one risk point to be presented associated with the risk point in an expanded manner; and displaying a fact category associated with the risk point in the first area in a distinguishing manner.

In practice, after displaying, in the right area of the result presenting interface, the respective risk points associated with the risk category, for each risk point, a trigger operation can be input for the current risk point when viewing the respective risk points to be displayed corresponding to the current risk point. Upon detecting a trigger operation for the current risk point, a response can be made to the trigger operation, including: displaying the respective risk points to be presented associated with the current risk point. In order to directly display, on the result presenting interface, the fact category to which the respective risk points to be presented corresponding to the current risk point belong, the fact category associated with the current risk point is also displayed in the first area upon detecting the trigger operation for the current risk point. Such arrangement has the advantages of: achieving associated interaction between the risk point and the corresponding fact category, and displaying as many risk points as possible in the limited page space, making full use of the interface space.

An expanded display control can be preset in the risk-point display area. Upon detecting a trigger operation for the expanded display control, a response is made thereto, including: displaying, in vicinity of the expanded display control, the respective risk points to be presented associated with the risk point in the expanded manner. Alternatively, upon detecting a trigger operation for the expanded display control, the risk points to be presented associated with the risk point are displayed in the form of a pop-up window in vicinity of the expanded display control. This is not specifically limited herein.

Displaying the fact category in the first area in the distinguishing manner may include: replacing the background color of the display control corresponding to the fact category with other color, and labeling the contour of the display control with lines having a color similar to the background color, enlarging the display control corresponding to the fact category for display; or displaying in other distinguishing manner, which is not specifically herein.

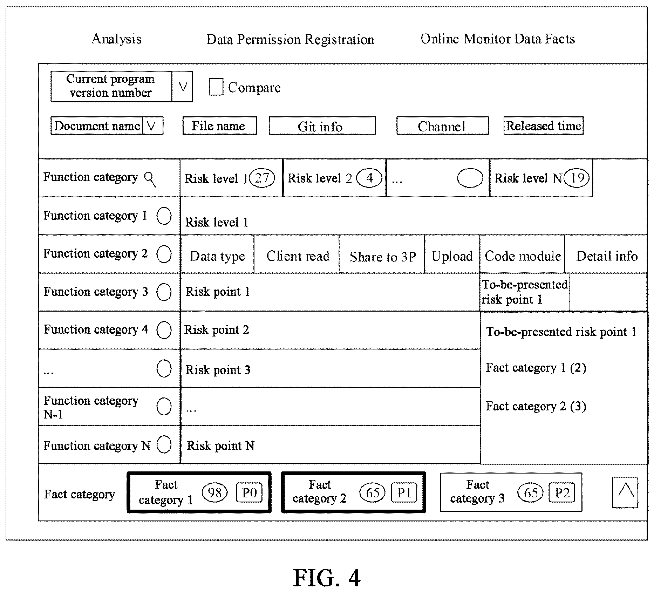

By way of example, as shown in Fig. 4, upon detecting a trigger operation for a Code Module area of the risk point 1, the respective risk points to be presented associated with the risk point 1 are displayed in the bottom of the Code Module area of the risk point 1, and meanwhile, the fact category 1 and the fact category 2 associated with the risk point 1 are displayed in a distinguishing manner.

In practice, in order to display, in the limited interface space, risk points and corresponding risk points to be presented as many as possible, the respective risk points and the corresponding risk points to be presented are all displayed in the corresponding area in the form of a directory. When it is required to trace details of any of the risk points to be presented, so as to perform a corresponding adjustment, a trigger operation may be input for the risk point to be presented, to display, in the corresponding area, details of the risk point to be presented.

On the basis of the respective embodiments described above, the method further includes: in response to a trigger operation for the risk point to be presented, jumping to a risk point detail page, so as to present each risk sub-point in the risk point detail page.

In these embodiments, the risk point detail page may be a page for displaying details of each risk sub-point associated with the risk point to be presented.

In practice, a detail jumping control is preset in the area where each risk point to be presented is located. Upon detecting a trigger operation for a jump-to-detail control for any risk point to be presented, a response may be made thereto, including: jumping to a risk point detail page corresponding to the risk point to be presented, where respective risk sub-points corresponding to the risk point to be presented and corresponding detail information can be presented. Such arrangement has the advantages of: by tracing the risk point detail information, helping the developers to determine a corresponding strategy based on the detail information and thus efficiently make adjustments for the risk points.

The risk point detail page may further include a risk point select control and a to-be-presented risk point select control. Upon detecting a trigger operation for the risk point select control, all the risk points associated with the current risk category are displayed in the corresponding area of the risk point detail page. By performing a trigger operation for any of the risk points, a corresponding risk point is determined. Meanwhile, the risk point detail page can be switched to a page corresponding to the risk point. Upon detecting a trigger operation for the to-be-presented risk point select control, the respective risk points to be presented associated with the current risk point can be displayed in the corresponding area of the risk point detail page. By performing a trigger operation for any of the risk points to be presented, the respective risk points to be presented are determined. Meanwhile, the respective risk sub-points associated with the current risk point to be presented and corresponding detail information can be displayed in the risk point detail page.

Upon detecting the trigger operation for the risk point to be presented and jumping to the risk point detail page, the fact category corresponding to the risk point to be presented can also be displayed in the first area in a distinguishing manner, and other fact categories displayed in the distinguishing manner can be restored to the initial form, to thus implement interaction between the risk point to be presented and the corresponding fact category.

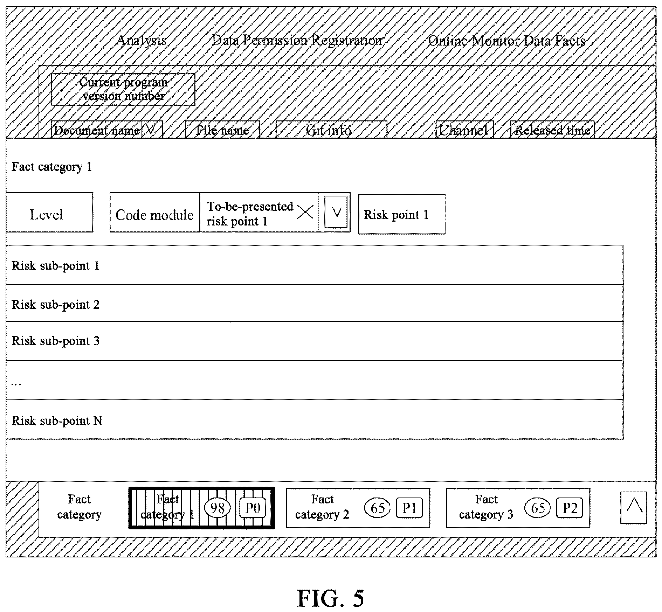

By way of example, as shown in Fig. 5, upon detecting a trigger operation for the risk point to be presented 1, the page can be redirected to the risk point detail page corresponding to the risk point to be presented 1, to display respective risk sub-points in the risk point detail page, and a switching operation for the risk point to be presented and the risk points can be performed on the risk point detail page, so that the risk detail information of the respective risk points and the corresponding risk point to be displayed can be viewed on the risk point detail page.

In an embodiment, presenting the at least one function category in the scanning result in the corresponding at least one presenting area of the result presenting interface includes: presenting the at least one function category in the left area.

Wherein, each function category is associated with the at least one risk category in the second area.

In practice, the respective function categories associated with the current program version can be displayed in the left area of the result presenting interface, specifically arranged vertically in the left area according to the user needs. Such arrangement has the advantages of: displaying clearly the respective function categories associated with the current program version on the result presenting interface, to enable developers associated with the respective function categories to filter out corresponding risk points and fact categories based on the corresponding function categories.

The function category is a program function corresponding to the current program version, and scanning the current program version may include scanning data or codes corresponding to the respective function categories, to obtain risk scanning results corresponding to the respective function categories. Accordingly, the respective function categories may be associated with at least one risk category, and there may be one or more risk categories associated with each function category.

Since each risk point associated with the risk category is associated with at least one fact category, the respective risk categories and the respective fact categories corresponding to the function category can be displayed in respective areas on the result presenting interface upon detecting a trigger operation for the function category.

On the basis of respective embodiments described above, the method further includes: in response to a trigger operation for a function category, displaying at least one risk point associated with the function category in the second area in a distinguishing manner, and displaying a fact category associated with the function category in the first area in a distinguishing manner.

In practice, when determining risk points and fact categories associated with a function category, a trigger operation can be input based on the corresponding function category. Upon detecting the trigger operation for the function category, a response is made thereto, including: displaying the function category in the left area in a distinguishing manner; meanwhile, displaying the respective risk categories associated with the function category and the corresponding risk points in the second area in a distinguishing manner, and displaying the respective fact categories associated with the function category in the first area in a distinguishing manner. Such arrangement has the advantages of: helping program developers associated with the respective function categories to filter out the risk points in the corresponding function category and the fact categories and then adjust the risky data or codes included in the corresponding function category, thereby achieving interaction among the function category, the risk category and the fact category while improving the work efficiency.

After detecting the trigger operation for any of function categories, a response is made to the trigger operation, including: refreshing the result presenting interface, and switching the result presenting interface to a scanning result presenting interface corresponding to the function category (i.e., displaying the function category in the left area in a distinguishing manner); meanwhile, displaying only the respective risk categories associated with the function category and corresponding risk points in the second area, and displaying only the respective fact categories associated with the function category in the first area. Upon detecting a trigger operation for a further function category, the result presenting interface is refreshed again and switched to the scanning result presenting interface associated with the function category.

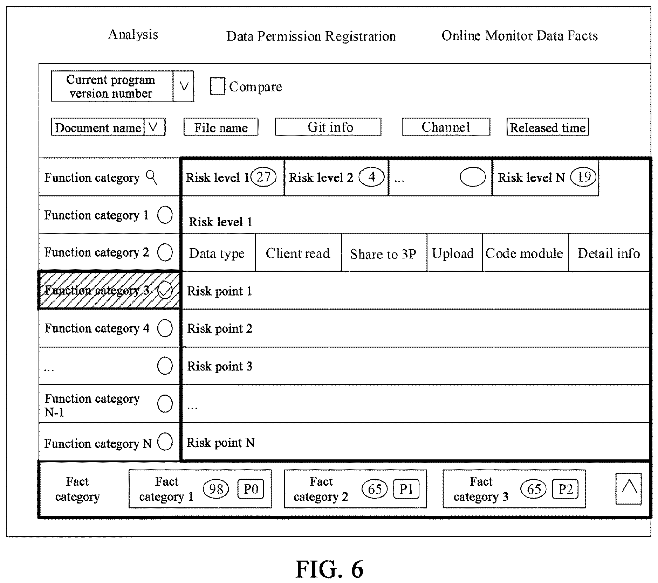

By way of example, as shown in Fig. 6, upon detecting a trigger operation for a function category 3, the result presenting interface is refreshed, and the first area and the second area are switched to a content associated with the function category 3, i.e., respective fact categories associated with the function category 3 is displayed in the first area, and the respective risk categories associated with the function category 3 and corresponding risk points are displayed in the second area.

In practice, the scanning result can be generated according to a program version granularity, i.e., each program version corresponding to a scanning result; after obtaining the scanning result corresponding to the current program version, in order to determine differences between the current program version and history program versions, the scanning result corresponding to the current program version and a scanning result of each of other program versions can be compared.

On the basis of the respective embodiments described above, the method further includes: in response to a program version scanning and comparison operation, displaying difference information between at least two program versions in the second area.

In these embodiments, a scanning compare control may be preset in the result presenting interface. Upon detecting that a user performs a trigger operation for the control, a response is made thereto, including: adding a version number display area of a history program version in vicinity of the version number display control of the current program version. In the display area, an expanded display can be implemented through an area expanded control. For example, upon detecting a trigger operation for the area expanded control, version numbers of all the history program versions associated with the application can be displayed in the area, and by inputting a trigger operation for each version number, a history program version is selected. Upon triggering the selection, the version numbers not selected are displayed in the display area in a folded manner, i.e., the history program version number display area only displays the version number of the history program version selected by triggering, and the second display area displays difference information between the current program version and the selected history program version. It is worth noting that, when the difference information between two program versions is displayed, in order to embody the New, Changed and Deleted between two program versions, different colors may be preset to represent the New, Changed and Deleted respectively, so as to display clearly and intuitively the difference information between two program versions on the result presenting interface. Alternatively, when the difference information between two program versions is displayed, only different risk categories and corresponding risk points between the two program versions are displayed in the second area. Alternatively, other difference information may be displayed, which is not limited specifically herein. Such arrangement has the advantages of: performing difference comparison between at least two program versions, and quickly identifying difference information between the at least two program versions, which increases the scanning result presenting complexity.

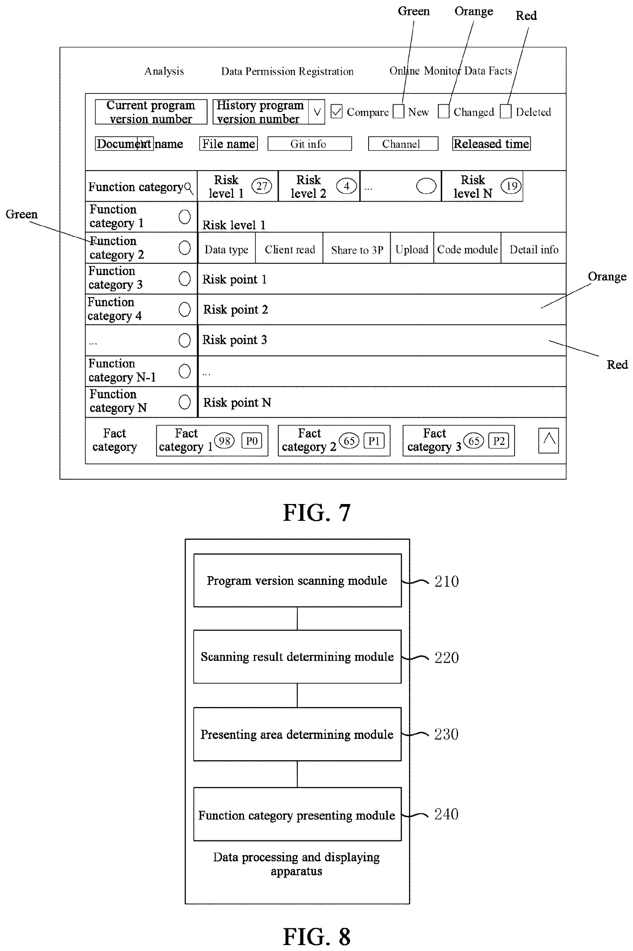

By way of example, as shown in Fig. 7, upon detecting a trigger operation for a compare control, a history program version number display area can be added on the right side of the current program version number display area, and an area expanded control can be set in the display area. Moreover, a plurality of difference comparison charts can be added on the right side of the compare control, where green indicates New, orange indicates Changed, and red indicates Deleted, for example. Upon detecting a trigger operation for any of history program version numbers, corresponding difference information can be displayed in the area having differences therein, and the corresponding difference information is padded with the difference comparison charts. For example, for the current program version compared with the selected history program version, the function category 2 is newly added, the risk point 2 is changed, and the risk point 3 is deleted.

If there are differences between the two program versions in terms of function category or fact category, difference information therebetween can be displayed in the corresponding area.

When determining history program versions to be compared with the current program version, a history program version may be selected, or a plurality of history program versions may be selected for simultaneous comparison, which is not limited specifically herein.

In the embodiments of the present disclosure, in response to a scanning triggering operation for a current program version, the current program version is scanned; a scanning result corresponding to the current program version is determined; at least one presenting area, corresponding to the at least one function category in the scanning result, in a result presenting interface is determined; the at least one function category in the scanning result is presented in the at least one presenting area of the result presenting interface. In this way, the embodiments of the present disclosure can avoid displaying the scanning result in a single dimension, leading to an unintuitive display of the scanning result, which is hard for users to browse and understand the result, and can further improve the interface utilization by displaying the scanning result simultaneously on the same interface and enable users to intuitively browse the result, satisfying the user need and improving the user experience by simultaneously displaying the scanning results on the same interface.

Fig. 8 illustrates a schematic diagram of a structure of a data processing and display apparatus provided by embodiments of the present disclosure. As shown therein, the apparatus includes: a program version scanning module 210, a scanning result determining module 220, a presenting area determining module 230, and a function category presenting module 240.

The program version scanning module 210 is configured to scan a current program version in response to a scanning trigger operation for the current program version.

The scanning result determining module 220 is configured to determine a scanning result corresponding to the current program version, wherein the scanning result comprises at least one fact category, at least one risk category and at least one function category corresponding to the current program version.

The presenting area determining module 230 is configured to determine at least one presenting area, corresponding to the at least one function category in the scanning result, in a result presenting interface.

The function category presenting module 240 is configured to present the at least one function category in the scanning result in the at least one presenting area of the result presenting interface.

On the basis of the respective embodiments described above, the function category presenting module 240 is configured to present the at least one fact category in a first area of the result presenting area, the at least one risk category in a second area, and the at least one function category in a third area;
wherein the first area, the second area and the third area correspond to different areas on the result presenting interface.

On the basis of the respective embodiments described above, the first area is located at a bottom of the result presenting interface, the scanning result further comprises a risk level corresponding to the at least one fact category, and the function category presenting module 240 comprises: a fact category presenting unit.

The fact category pressing unit is configured to determine, based on the at least one fact category and corresponding risk level, a display content corresponding to at least one display control, wherein the at least one display control is arranged in the first area according to a preset rule, and the first area is expandable for display; and display the display content in a corresponding display control.

On the basis of the respective embodiments described above, the second area is a right area of the result presenting interface, and the function category presenting module 240 comprises: a risk category presenting unit.

The risk category presenting unit is configured to display, in the left area of the result presenting interface, the at least one risk category and at least one risk point associated with the risk category as a set of data; wherein at least one risk point to be presented is displayed in a folded manner under each risk point.

On the basis of the respective embodiments described above, the apparatus further includes: a to-be-displayed risk point displaying module and a fact category difference displaying module.

The to-be-displayed risk point displaying module is configured to display at least one risk point to be presented associated with the risk point in an expanded manner in response to detecting that the risk point is triggered; and
The fact category difference displaying module is configured to display a fact category associated with the risk point in the first area in a distinguishing manner.

On the basis of the respective embodiments described above, the apparatus further includes: a risk point detail page jumping module.

The risk point detail page jumping module is configured to jump to a risk point detail page in response to a trigger operation for the risk point to be presented, so as to present respective risk sub-point in the risk point detail page.

On the basis of the respective embodiments described above, the third area is a right area of the result presenting interface, and the function category presenting module 240 includes: a function category presenting module.

The function category presenting module is configured to present the at least one function category in the right area; and wherein each function category is associated with the at least one risk category in the second area.

On the basis of the respective embodiments described above, the apparatus further includes: a risk point difference displaying module.

The risk point difference displaying module is configured to display at least one risk point associated with the function category in the second area in a distinguishing manner, and display a fact category associated with the function category in the first area in a distinguishing manner, in response to a trigger operation for the function category.

On the basis of the respective embodiments described above, the apparatus further includes: a difference information displaying module.

The difference information displaying module is configured to display difference information between at least two program versions in the second area in response to a program version scanning and comparison operation.

In the embodiments of the present disclosure, in response to a scanning triggering operation for a current program version, the current program version is scanned; a scanning result corresponding to the current program version is determined; at least one presenting area, corresponding to the at least one function category in the scanning result, in a result presenting interface is determined; the at least one function category in the scanning result is presented in the at least one presenting area of the result presenting interface. In this way, the embodiments of the present disclosure can avoid displaying the scanning result in a single dimension, leading to an unintuitive display of the scanning result, which is hard for users to browse and understand the result, and can improve the interface utilization by displaying the scanning result simultaneously on the same interface and enable users to intuitively browse the result, satisfying the user need and improving the user experience by simultaneously displaying the scanning results on the same interface.

The data processing and display apparatus provided by the embodiments of the present disclosure can perform the data processing and presenting method provided by any of the embodiments of the present disclosure, which includes functional modules corresponding to the method and can achieve the corresponding effects.

A plurality of units and modules included in the above-mentioned apparatus is divided according to the functional logic, which are not confined to the above division as long as they can implement the respective functions. In addition, names of the plurality of functional units are employed only for differentiation from one another, without suggesting any limitation to the protection scope of the embodiments of the present disclosure.

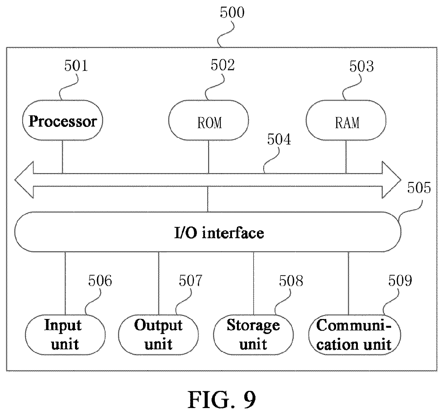

Fig. 9 illustrates a schematic diagram of a structure of an electronic device provided by embodiments of the present disclosure. Hereinafter, reference will be made to Fig. 9 that illustrates a schematic diagram of a structure of an electronic device (e.g. a terminal device or server in Fig. 9) 500 adapted to implement embodiments of the present disclosure. The terminal device according to the embodiments of the present disclosure may include a mobile terminal such as a mobile phone, a laptop computer, a digital broadcast receiver, a Personal Digital Assistant (PDA), a Portable Android Device (PAD), a Portable Media Player (PMP), an on-vehicle terminal (e.g. an on-vehicle navigation terminal) or the like, or a fixed terminal such as a digital television (TV), a desktop computer or the like. The electronic device as shown in Fig. 9 is provided merely as an example, without suggesting any limitation to the functions and the application range of the embodiments of the present disclosure.

As shown therein, the electronic device 500 may include a processor (e.g. a central processor, a graphics processor or the like) 501, which can execute various acts and processing based on programs stored in a Read Only Memory (ROM) 502 or a program loaded from a storage unit 508 to a Random Access Memory (RAM) 503. RAM 503 stores therein various programs and data required for operations of the electronic device 500. The processor 501, the ROM 502 and the RAM 503 are connected to one another via a bus 504. An input/output (I/O) interface 505 is also connected to the bus 504.

Typically, the following units may be connected to the I/O interface 505: an input unit 506 including, for example, a touchscreen, a touch pad, a keyboard, a mouse, a camera, a microphone, an accelerometer, a gyroscope and the like; an output unit 507 including, for example, a Liquid Crystal Display (LCD), a loudspeaker, a vibrator and the like; a storage unit 508 including, for example, a tape, a hard drive and the like; and a communication unit 509. The communication unit 509 can allow wireless or wired communication of the electronic device 500 with other devices to exchange data. Although Fig. 9 shows the electronic device 500 including various units, it would be appreciated that not all of the units as shown are required to be implemented or provided. Alternatively, more or fewer units may be implemented or provided.

In particular, according to embodiments of the present disclosure, the processes described above with reference to the flowchart may be implemented as a computer software program. For example, embodiments of the present disclosure include a computer program product comprising computer programs carried on a non-transitory computer readable medium, the computer program containing program code for performing the method as shown in the flowchart. In those embodiments, the computer program may be downloaded and installed from a network via the communication unit 509, or may be installed from the storage unit 508, or may be installed from the ROM 502. The computer program, when executed by the processor 501, performs the above-described functions defined in the method according to the embodiments of the present disclosure.

Names of messages or information interacted between a plurality of apparatuses in the embodiments of the present disclosure are illustrative rather than limit the scope of the messages or information.

The electronic device provided by the embodiments of the present disclosure belongs to the same invention conception as the data processing and presenting method provided by the above-mentioned embodiments. For the technical details not exhausted here, see the above-mentioned embodiments, and these embodiments can achieve the same advantageous effect as the above-mentioned embodiments.

The embodiments of the present disclosure provide a computer storage medium having a computer program stored thereon, where the program, when executed by a processor, implements the data processing and presenting method provided by the above-mentioned embodiments.

The computer readable medium according to the present disclosure may be a computer readable signal medium or a computer readable storage medium or any combination of the two. The computer readable storage medium may be, for example, but not limited to, an electronic, magnetic, optical, electromagnetic, infrared, or semiconductor system, apparatus, or device, or any combination of the foregoing. More specific examples of the computer readable storage medium may include, but are not limited to: an electrical connection having one or more wires, a portable computer diskette, a hard disk, an RAM, an ROM, an erasable programmable read-only memory (EPROM or flash memory), an optical fiber, a portable compact disc read-only memory (CD-ROM), an optical storage device, a magnetic storage device, or any suitable combination of the foregoing. In the present disclosure, a computer readable storage medium may be any tangible medium that can contain, or store, a program for use by or in connection with an instruction execution system, apparatus, or device. In contrast, in the present disclosure, a computer readable signal medium may include a propagated data signal with computer readable program code embodied therein, either in baseband or as part of a carrier wave. Such propagated data signal may take many forms, including, but not limited to, an electro-magnetic signal, an optical signal, or any suitable combination thereof. A computer readable signal medium may also be any computer readable medium that is not a computer readable storage medium and that can communicate, propagate, or transmit a program for use by or in connection with an instruction execution system, apparatus, or device. Program code embodied on a computer readable medium may be transmitted using any appropriate medium, including but not limited to: electrical wires, optical cables, RF (radio frequency), etc., or any suitable combination of the foregoing.

In some embodiments, the client and the server may perform communication by using any known network protocol such as Hyper Text Transfer Protocol (HTTP) or any network protocol to be developed, and may connect with digital data in any form or carried in any medium (for example, a communication network). The communication network includes a local area network (LAN), a wide area network (WAN), an international network (for example, the internet), a peer-to-peer network (e.g. ad hoc peer-to-peer network), and any known network or network to be developed.

The computer-readable medium may be the one included in the electronic device, or may be provided separately, rather than assembled in the electronic device.

The computer-readable medium carries one or more programs which, when executed by the electronic device, cause the electronic device to:
in response to a scanning trigger operation for a current program version, scan the current program version,
determine a scanning result corresponding to the current program version, wherein the scanning result comprises at least one fact category, at least one risk category and at least one function category corresponding to the current program version;
determine at least one presenting area, corresponding to the at least one function category in the scanning result, in a result presenting interface; and
present the at least one function category in the scanning result in the at least one presenting area of the result presenting interface.

Alternatively, the computer-readable medium carries one or more programs which, when executed by the electronic device, cause the electronic device to:
in response to a scanning trigger operation for a current program version, scan the current program version;
determine a scanning result corresponding to the current program version, wherein the scanning result comprises at least one fact category, at least one risk category and at least one function category corresponding to the current program version;
determine at least one presenting area, corresponding to the at least one function category in the scanning result, in a result presenting interface; and
present the at least one function category in the scanning result in the at least one presenting area of the result presenting interface.

Computer program code for performing operations of the present disclosure may be written by using one or more program design language or any combination. The program design language includes, but is not limited to, object oriented program design language such as Java, Smalltalk and C++, and further includes conventional process-type program design language such as "C" or similar program design language. The program code may be completely or partially executed on a user computer, performed as an independent software packet, partially executed on the user computer and partially executed on a remote computer, or completely executed on the remote computer or a server. In a case of involving the remote computer, the remote computer may connect to the user computer via any type of network such as a local area network (LAN) and a wide area network (WAN). Alternatively, the remote computer may connect to an external computer (such as achieving internet connection by services provided by the internet network service provider).

The flowchart and block diagrams in the drawings illustrate the architecture, functionality and operation of possible implementations of systems, methods and computer program products according to various embodiments of the present disclosure. In this regard, each block in the flowchart or block diagrams may represent a block, segment, or portion of code, which comprises one or more executable instructions for implementing the specified logical function(s). It should also be noted that, in some alternative implementations, the functions noted in the block may occur out of the order noted in the figures. For example, two blocks shown in succession may, in fact, be executed substantially concurrently, or the blocks may sometimes be executed in the reverse order, depending upon the functionality involved. It will also be noted that each block of the block diagrams and/or flowcharts, and combinations of blocks in the block diagrams and/or flowcharts, can be implemented by special purpose hardware-based systems which perform the specified functions or acts, or combinations of special purpose hardware and computer instructions.

According to one or more embodiments of the present disclosure, [Example I] provides a data processing and presenting method, comprising:
in response to a scanning trigger operation for a current program version, scanning the current program version;
determining a scanning result corresponding to the current program version, wherein the scanning result comprises at least one fact category, at least one risk category and at least one function category corresponding to the current program version;
determining at least one presenting area, corresponding to the at least one function category in the scanning result, in a result presenting interface; and
presenting the at least one function category in the scanning result in the at least one presenting area of the result presenting interface.

According to one or more embodiments of the present disclosure, [Example II] provides a data processing and presenting method, further comprising:
presenting the at least one fact category in a first area of the result presenting area, the at least one risk category in a second area, and the at least one function category in a third area; and
wherein the first area, the second area and the third area correspond to different areas on the result presenting interface.

According to one or more embodiments of the present disclosure, [Example III] provides a data processing and presenting method, wherein the first area is located at a bottom of the result presenting interface, the scanning result further comprises a risk level corresponding to the at least one fact category, and the method further comprises:
determining, based on the at least one fact category and corresponding risk level, a display content corresponding to at least one display control, wherein the at least one display control is arranged in the first area according to a preset rule, and the first area is expandable for display; and
displaying the display content in a corresponding display control.

According to one or more embodiments of the present disclosure, [Example IV] provides a data processing and presenting method, wherein the second area is a right area of the result presenting interface, and the method further comprises:
displaying, in the left area of the result presenting interface, the at least one risk category and at least one risk point associated with the risk category as a set of data;
wherein at least one risk point to be presented is displayed in a folded manner under each risk point.

According to one or more embodiments of the present disclosure, [Example V] provides a data processing and presenting method, further comprising:
in response to detecting that the risk point is triggered, displaying at least one risk point to be presented associated with the risk point in an expanded manner; and
displaying a fact category associated with the risk point in the first area in a distinguishing manner.

According to one or more embodiments of the present disclosure, [Example VI] provides a data processing and presenting method, further comprising:
in response to a trigger operation for the risk point to be presented, jumping to a risk point detail page, so as to present each risk sub-point in the risk point detail page.

According to one or more embodiments of the present disclosure, [Example VII] provides a data processing and presenting method, wherein the third area is a right area of the result presenting interface, and the method further comprises:
presenting the at least one function category in the right area; and
wherein each function category is associated with the at least one risk category in the second area.

According to one or more embodiments of the present disclosure, [Example VII provides a data processing and presenting method, further comprising:
in response to a trigger operation for a function category, displaying at least one risk point associated with the function category in the second area in a distinguishing manner, and displaying a fact category associated with the function category in the first area in a distinguishing manner.

According to one or more embodiments of the present disclosure, [Example IX] provides a data processing and presenting method, further comprising:
in response to a program version scanning and comparisons operation, displaying difference information between at least two program versions in the second area.

According to one or more embodiments of the present disclosure, [Example I] provides a data processing and display apparatus, comprising:
a program version scanning module configured to scan a current program version in response to a scanning trigger operation for the current program version;
a scanning result determining module configured to determine a scanning result corresponding to the current program version, wherein the scanning result comprises at least one fact category, at least one risk category and at least one function category corresponding to the current program version;
a presenting area determining module configured to determine at least one presenting area, corresponding to the at least one function category in the scanning result, in a result presenting interface; and
a function category presenting module configured to present the at least one function category in the scanning result in the at least one presenting area of the result presenting interface.

It would be appreciated by those skilled in the art that the scope of the disclosure herein is not limited to the particular combination of features described above, but also encompasses other embodiments in which any combination of the features described above or their equivalents does not depart from the spirit of the disclosure. For example, the above features and (but not limited to) the features disclosed in this disclosure having similar functions are replaced with each other to form the technical solution.

Further, while operations are depicted in a particular order, this should not be understood as requiring that such operations be performed in the particular order shown or in sequential order. In certain circumstances, multitasking and parallel processing may be advantageous. Likewise, while several specific implementation details are contained in the above discussions, these should not be construed as limitations on the scope of the present disclosure, but rather as descriptions of features that may be specific to particular implementations. Certain features that are described in the context of separate embodiments may also be implemented in combination in a single embodiment. Conversely, various features that are described in the context of a single embodiment may also be implemented in multiple embodiments separately or in any suitable sub-combination.

Although the present disclosure has been described in language specific to structural features and/or methodological acts, it is to be understood that the present disclosure specified in the appended claims is not necessarily limited to the specific features or acts described above. Rather, the specific features and acts described above are disclosed as example forms of implementing the claims.

## Claims

1. A data processing and display method, comprising:
in response to a scanning trigger operation for a current program version, scanning the current program version;
determining a scanning result corresponding to the current program version, wherein the scanning result comprises at least one fact category, at least one risk category and at least one function category corresponding to the current program version;
determining at least one presenting area, corresponding to the at least one function category in the scanning result, in a result presenting interface; and
presenting the at least one function category in the scanning result in the corresponding at least one presenting area of the result presenting interface.

2. The method of claim 1, wherein presenting the at least one function category in the scanning result in the corresponding at least one presenting area of the result presenting interface comprises:
presenting the at least one fact category in a first area of the result presenting area, presenting the at least one risk category in a second area, and presenting the at least one function category in a third area; and
wherein the first area, the second area and the third area correspond to different areas of the result presenting interface.

3. The method of claim 2, wherein the first area is located at a bottom of the result presenting interface, wherein the scanning result further comprises a risk level corresponding to the at least one fact category, and wherein presenting the at least one function category in the scanning result in the corresponding at least one presenting area of the result presenting interface comprises:
determining, based on the at least one fact category and a corresponding risk level, display content corresponding to at least one display control, wherein the at least one display control is arranged in the first area according to a preset rule, and the first area is expandable for display; and
displaying the display content in a corresponding display control.

4. The method of claim 2, wherein the second area is located at a right area of the result presenting interface, and wherein presenting the at least one function category in the scanning result in the corresponding at least one presenting area of the result presenting interface comprises:
displaying, in the right area of the result presenting interface, the at least one risk category and at least one risk point associated with the risk category as a set of data; and
wherein at least one risk point to be presented is displayed in a folded manner under each risk point.

5. The method of claim 4, further comprising:
in response to detecting that the risk point is triggered, displaying at least one risk point to be presented associated with the risk point in an expanded manner; and
displaying a fact category associated with the risk point in the first area in a distinguishing manner.

6. The method of claim 5, further comprising:
in response to a trigger operation for the risk point to be presented, jumping to a risk point detail page, so as to present each risk sub-point in the risk point detail page.

7. The method of claim 2, wherein the third area is a left area of the result presenting interface, and wherein presenting the at least one function category in the scanning result in the corresponding at least one presenting area of the result presenting interface comprises:
presenting the at least one function category in the left area; and
wherein each function category is associated with the at least one risk category in the second area.

8. The method of claim 7, further comprising:
in response to a trigger operation for a function category, displaying at least one risk point associated with the function category in the second area in a distinguishing manner, and displaying a fact category associated with the function category in the first area in a distinguishing manner.

9. The method of claim 1, further comprising:
in response to a program version scanning and comparison operation, displaying difference information between at least two program versions in the second area.

10. A data processing and display apparatus, comprising:
a program version scanning module configured to scan the current program version in response to a scanning trigger operation for a current program version;
a scanning result determining module configured to determine a scanning result corresponding to the current program version, wherein the scanning result comprises at least one fact category, at least one risk category and at least one function category corresponding to the current program version;
a presenting area determining module configured to determine at least one presenting area, corresponding to the at least one function category in the scanning result, in a result presenting interface; and
a function category presenting module configured to present the at least one function category in the scanning result in the corresponding at least one presenting area of the result presenting interface.

11. An electronic device, comprising:
one or more processors, and
a storage apparatus storing one or more programs, wherein the one or more programs, when executed by the one or more processors, cause the one or more processors to implement the data processing and display method of any of claims 1-9.

12. A storage medium comprising computer executable instructions, wherein the computer executable instructions are configured to, when executed by a computer processor, perform the data processing and display method of any of claims 1-9.
